**Europäisches Patentamt**

**European Patent Office**

**Office européen des brevets**

(19)

(11) Veröffentlichungsnummer: **0 043 016**
**B1**

(12)

# EUROPÄISCHE PATENTSCHRIFT

(45) Veröffentlichungstag der Patentschrift:
**01.08.84**

(51) Int. Cl.³: **G 11 B 23/02**, B 65 D 85/672

(21) Anmeldenummer: **81104528.5**

(22) Anmeldetag: **12.06.81**

(54) **Spulenbehälter aus Kunststoff für Magnetbänder.**

(30) Priorität: **26.06.80 DE 8016911 U**

(43) Veröffentlichungstag der Anmeldung:
**06.01.82 Patentblatt 82/1**

(45) Bekanntmachung des Hinweises auf die Patenterteilung:
**01.08.84 Patentblatt 84/31**

(84) Benannte Vertragsstaaten:
**DE FR GB**

(56) Entgegenhaltungen:
**DE - A - 2 610 832**
**DE - U - 7 407 935**
**DE - U - 7 427 524**
**US - A - 3 169 682**
**US - A - 3 417 894**
**US - A - 3 612 233**

*Zeitschrift Fördern und Heben 19 (1969), No. 11, S. 702*
*und 703*

(73) Patentinhaber: **AGFA-GEVAERT Aktiengesellschaft,**
**D-5090 Leverkusen 1 (DE)**

(72) Erfinder: **Thiele, Hartmut, Herterichstrasse 83,**
**D-8000 München 71 (DE)**
Erfinder: **Schmelter, Dieter, Am Lindenberg 78,**
**D-8134 Pöcking (DE)**
Erfinder: **Posch, Rainer, Sonnwendjochstrasse 106,**
**D-8000 München 82 (DE)**

## Beschreibung

Die Erfindung betrifft einen Spulenbehälter aus Kunststoff für Magnetbänder, insbesondere Videobänder, nach dem Oberbegriff des Anspruchs 1.

An die Verpackung insbesondere von Videobändern auf dem Transportweg müssen folgende Anforderungen erfüllt sein: Der Magnetbandwikkel muss stossfest verpackt, gegen Staub geschützt, der Schliessmechanismus gegen Erschütterung gesichert sein und der Behälter soll nicht zuletzt leicht und in den Herstellungskosten nieder sein. Derartige Transportbehälter werden in neuerer Zeit aus Kunststoff hergestellt. Als besonders geeignet haben sich geblasene Hohlkörper aus Polypropylen erwiesen. Der Verschluss derartiger Transportbehälter erfolgt meistens über einen zentral angeordneten Schliessmechanismus, der mit einem Drehgriff bedient und mit dem Verriegelungsmittel des anderen Behälterteils durch die Nabe der Spule hindurch in Eingriff gebracht wird.

In dem deutschen Gebrauchsmuster 74 07 935 ist eine zentral angeordnete Verriegelungs-Vorrichtung für Magnetbänder und Plattenstapel beschrieben, die in ihrem äusseren Teil in bekannter Weise aus einem Topf besteht, an dem auf der Unterseite Klemmmittel angeformt sind, die in eingesetztem Zustand mit Teilen des Behälterbodens zusammenwirken und dadurch kraftschlüssig ver- und entriegelbar ist. Zusätzlich ist an der Topfunterseite ein federndes Rastmittel, das bei Einsetzen der Verriegelungsvorrichtung diese im Behälterdeckel verrastet. Derartige Verriegelungsvorrichtungen sind in erster Linie für Plattenstapel gedacht und aus Gründen der Datensicherung relativ aufwendig konstruiert.

Neben zentralen Schliessmechanismen gibt es verschiedenartige Verschlusshebel, die an den einzelnen Ecken des Behälters angebracht sind und dadurch die Staubsicherung erhöhen. Weiter werden Schnapp- und Spannhebel sowie Schiebevorrichtungen benutzt – wie z.B. in der Zeitschrift Fördern und Heben 19 (1969) No. 11, S. 702/703, in den US-Patentschriften US-A-31 69 682, US-A-34 17 894 und US-A-36 12 233 : beschrieben – die aus Fertigungsgründen aus dem gleichen Kunststoffmaterial wie die Behälter hergestellt sind. Beim Transport können sich einfache Schnapphebel und Verschlussschieber durch unsachgemässe Behandlung öffnen und somit zu einer Beschädigung von Material und Behälter führen.

Aufgabe der Erfindung ist diese Mängel zu beheben durch Schaffung eines Spulenbehälters, der die eingangs genannten Bedingungen erfüllt und mit einer einfachen Transportsicherung versehen ist, die ein unabsichtliches Öffnen des Koffers verhindert und gleichzeitig die Sicherung des Kofferinhalts gegen Feuchtigkeit und Staub erhöht.

Die Aufgabe wird erfindungsgemäss durch einen Spulenbehälter aus Kunststoff für Magnetbänder, insbesondere Videobänder, gelöst, wie er im Anspruch 1 beansprucht ist.

Weitere Einzelheiten des erfindungsgemässen Spulenbehälters sind dem Anspruch 2, der Beschreibung und den Zeichnungen zu entnehmen.

Eine Ausführungsform des erfindungsgemässen Spulenbehälters wird an Hand von Zeichnungen näher erläutert. Es stellt

Fig. 1 eine Schrägaufsicht auf den Behälter,

Fig. 2 eine Aufsicht auf den Behälter im Bereich der Transportsicherung

Fig. 3 eine Seitenansicht des Verschlusshebels dar.

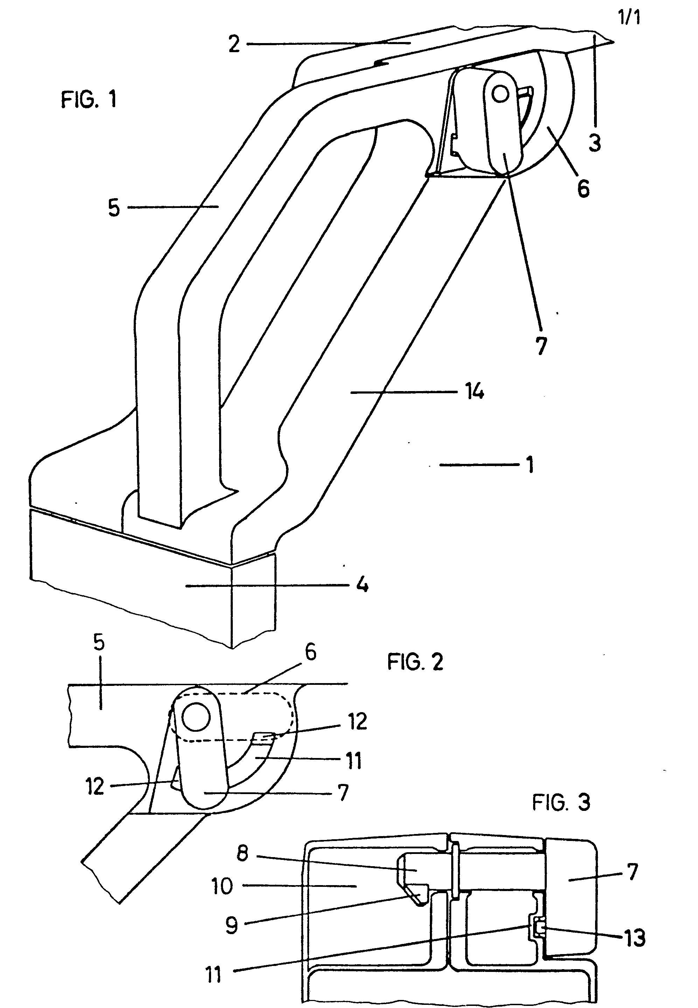

Der in Fig. 1 und 2 teilweise dargestellte über Scharniere aufklappbare Kunststoffbehälter (1), vorzugsweise im Blasverfahren hergestellt, weist eine Bodenwanne (2) und eine Deckelwanne (3) auf zur Aufnahme eines auf Spule gewickelten Magnetbandes. Auf der Frontseite befindet sich ein Schiebeverschluss (4), der natürlich auch durch einen anderen Schliessmechanismus, z.B. Schnappverschluss ersetzt sein kann. Die darüberliegende Ecke des Behälters ist abgeschrägt und wird auf der inneren Hälfte der Deckelfläche von einem Haltegriff (5) überspannt. Am Übergang zur Deckelwanne befindet sich eine teilkreisförmige Mulde (6) in der halben Breite des Deckels, die die zusätzliche Transportsicherung aufnimmt. Sie besteht aus einem um 90° schwenkbaren, einarmigen Verschlussknebel (7), der – wie in Fig. 3 gezeigt – durch den anderen Deckelbereich mittels eines Zapfens (8) hindurchgreift und mittels eines Bartes (9) in einem Loch mit Aussparung im Gehäuse (10) verriegelbar ist. In der seitlichen Muldenwand verläuft eine kreisbogenförmige Nut (11), die an den beiden Enden Vertiefungen (12) aufweist. In diesen rastet der Verschlussknebel, der an seinen freien Enden an beiden Seiten Vorsprünge (13) trägt, beim Verschwenken um 90° ein. Der Bart des Verschlussknebels und die zur Einführung des Bartes vorgesehene Aussparung am Loch im Bodenteil des Behälters sind so zueinander zugeordnet, dass der Verschlusshebel in vertikaler Stellung verriegelt und in horizontaler Stellung entriegelt ist. Da der Verschlussknebel in die Kofferfläche integriert ist und in den Vertiefungen der Nut arretiert ist, lässt sich der Koffer beim Transport durch unvorsichtiges hantieren und durch sonstige Erschütterungen nicht entriegeln. Der kraftschlüssige Verschluss presst überdies die beiden Kofferhälften eng aneinander, und dichtet den Koffer, so dass der Inhalt des Koffers von Zutritt von Staub und Feuchtigkeit geschützt ist. Um beim Öffnen des Koffers den Verschlussknebel besser erfassen zu können, ist die Deckelfläche zum Knebel leicht abgeschrägt (14).

## Patentanprüche

1. Spulenbehälter aus Kunststoff für Magnetbänder, insbesondere Videobänder, bestehend aus einem Bodenteil (2) und einem Deckel (3), die jeweils als Wanne ausgebildet über Scharniere klappbar und über einen Schliessmechanismus (4) verbunden sind, mit einem die Ecke von der Frontseite zur Oberseite des Spulenbehälters den Deckel (3) übergreifenden und mit diesem einstückig ausgebildeten Haltegriffs (5), dadurch gekennzeichnet, dass am Übergang des Haltegriffs (5) zur Oberseite des Deckels (3) ein in einer teilkreisförmigen Mulde (6) schwenkbarer, einarmiger Verschlussknebel (7) angebracht ist, der an einem Ende mit einem durch den Haltegriff (5) des Deckels (3) und in das Bodenteil (2) greifenden Zapfen (8) mit Bart (9) und an dem anderen freien Ende mit Vorsprüngen (13) ausgestattet ist, die in einer gekurvten Nut (11) der Muldenwand verlaufen.

2. Spulenbehälter nach Anspruch 1, dadurch gekennzeichnet, dass der Verschlussknebel (7) mit seinen Vorsprüngen (13) in horizontaler oder in vertikaler Stellung in je einer Vertiefung (12) der Nut (11) einrastet, wodurch die Bewegung des Verschlussknebels auf einen Winkel von 90° begrenzt ist.

**Revendications**

1. Récipient de bobines en matière plastique destiné à des bandes magnétiques, en particulier des bandes vidéo, et constitué par une partie de fond (2) et un couvercle (3) qui, réalisés respectivement comme une cuvette, sont reliés par l'intermédiaire de charnières de façon à pouvoir se rabattre et par l'intermédiaire d'un mécanisme de fermeture (4), et comportant une poignée de maintien (5) chevauchant le coin, du côté avant au côté supérieur, du récipient et le couvercle (3) avec lequel elle est réalisée d'une seule pièce, caractérisé en ce que, à l'endroit de transition de la poignée de maintien (5) et du côté supérieur du couvercle (3), on dispose une manette de fermeture (7) à une seule branche pivotant dans une cavité (6) partiellement sphérique et qui, à une extrémité, est munie d'un pivot (8) avec un appendice (9), passant à travers la poignée de maintien (5) du couvercle (3) et pénétrant dans la partie de fond (2) et, à l'autre extrémité libre, est munie de protubérances (13) qui s'étendent dans une rainure courbe (11) de la paroi de la cavité.

2. Récipient de bobines selon la revendication 1, caractérisé en ce que la manette de fermeture (7) avec ses protubérances (13) s'enclenche dans la position horizontale ou dans la position verticale dans un renfoncement respectiv (12) de la rainure (11), ce qui limite le mouvement de la manette de fermeture à un angle de 90°.

**Claims**

1. Plastic spool container for magnetic tapes, in particular video tapes, consisting of a base section (2) and a cover (3) which are each tray-shaped, foldable by means of hinges and connected to each other by a closing mechanism (4), with a handle (5) which extends over the corner of the spool container from the front side to the upper side thereof and is formed in one piece with the cover (3), characterised in at a one-armed locking toggle (7), which can be pivoted in a cavity (6) shaped as part of a circle, is fitted at the transition between the handle (5) and the upper side of the cover (3) and is provided with a pin (8) with a tooth (9), which pin (8) extends through the handle (5) of the cover (3) and into the base section (2), and with projections (13) at the other free end which run in a curved groove (11) in the wall of the cavity.

2. Spool container according to Claim 1, characterised in that in a horizontal or vertical position the locking toggle (7) engages with its projections (13) in a respective indentation (12) in the groove (11), whereby the movement of the locking toggle is restricted to an angle of 90°.

FIG. 1